Europäisches Patentamt

European Patent Office

Office européen des brevets

(11) Veröffentlichungsnummer : **0 180 024**
**B1**

(12) EUROPÄISCHE PATENTSCHRIFT

(45) Veröffentlichungstag der Patentschrift :
17.08.88

(51) Int. Cl.⁴ : **G 03 B 21/11**

(21) Anmeldenummer : **85111785.3**

(22) Anmeldetag : **18.09.85**

(54) **Mikrofilm-Lesegerät.**

(30) Priorität : **13.10.84 DE 3437654**

(43) Veröffentlichungstag der Anmeldung :
**07.05.86 Patentblatt 86/19**

(45) Bekanntmachung des Hinweises auf die Patenterteilung : **17.08.88 Patentblatt 88/33**

(84) Benannte Vertragsstaaten :
**DE FR GB**

(56) Entgegenhaltungen :
**DE-A- 2 533 938**
**DE-A- 2 626 464**
**DE-A- 2 715 221**
**DE-A- 2 938 279**
**GB-A- 1 087 788**
**GB-A- 1 379 344**

(73) Patentinhaber : **MAP Mikrofilm Apparatebau Dr.**
**Poehler GmbH & Co. KG**
**Schulstrasse 2**
**D-6352 Ober-Mörlen (DE)**

(72) Erfinder : **Poehler, Hermann, Dr.**
**Taunusstrasse 11**
**D-6352 Ober-Mörlen (DE)**
Erfinder : **Dziemba, Peter, Ing. grad.**
**Ahornweg 17**
**D-6350 Bad Nauheim Wisselsheim (DE)**

(74) Vertreter : **Schlagwein, Udo, Dipl.-Ing.**
**Anwaltsbüro Ruppert & Schlagwein Frankfurter**
**Strasse 34**
**D-6350 Bad Nauheim (DE)**

## Beschreibung

Die Erfindung bezieht sich auf ein Mikrofilm-Lesegerät, welches eine in einer parallel zur Filmebene liegenden Richtung verfahrbare Filmbühne und eine in derselben Ebene senkrecht zur ersten Richtung verfahrbare Abbildungseinheit bestehend aus einer Beleuchtungseinheit und einem Objektiv aufweist, wobei mindestens zwei gegenseitig austauschbare Objektive zur Erzielung unterschiedlicher Vergrößerungen vorgesehen sind.

Üblicherweise bewegt man beim Projizieren von Filmbildern die Filmbühne mit der Filmkarte in beiden Koordinatenrichtungen, um das gewünschte Filmbild in den Strahlengang des Objektivs zu schieben. Auf diese Weise läßt sich auf einer Projektionsfläche oder Mattscheibe ein verzerrungsfreies und ausreichend gleichmäßig ausgeleuchtetes Bild erzielen. Um jedoch die Filmbühne quer zum Strahlengang verschieben zu können, muß das Gerät relativ breit sein, was oftmals unerwünscht ist.

Aus der DE-A-2 715 221 ist ein Mikrofilm-Lesegerät mit einer nur in einer Richtung verfahrbaren Filmbühne und einer in der senkrechten Richtung dazu verfahrbaren Abbildungseinheit (Objektiv und Beleuchtung) bekannt. Dieses Mikrofilm-Lesegerät hat jedoch keine gegenseitig austauschbaren Objektive.

Zur Vermeidung einer großen Baubreite ist es bekannt, quer zum Strahlengang statt der Filmbühne das Objektiv zusammen mit der Beleuchtungseinheit zu verschieben. Die Beleuchtungseinheit ist dabei starr mit einem Objektivhalter gekoppelt und bewegt sich stets synchron mit dem Objektiv. Hierbei ist jedoch die Ausleuchtung des projizierten Bildes für zahlreiche Anwendungsfälle nicht ausreichend gleichmäßig und es treten beträchtliche Schwierigkeiten auf, wenn wahlweise Objektive mit unterschiedlichen Brennweiten eingesetzt werden sollen. Bei Mikrofilm-Lesegeräten mit mehreren Objektiven sind diese üblicherweise schwenkbar angeordnet, so daß das jeweils gewünschte Objektiv in eine fluchtende Stellung zur Beleuchtungseinheit geschwenkt werden kann.

Durch die US-PS 3 963 337 ist es bei Stehbildprojektoren auch schon bekannt, das zu durchleuchtende Bild parallel zur optischen Achse des Objektivs zu verschieben, um ein verzerrungsfreies Bild zu erhalten, welches oberhalb der optischen Achse des Objektivs liegt. Zur Erzielung einer gleichmäßigen Ausleuchtung ist die Beleuchtungseinheit verschwenkbar angeordnet. Diese Anordnung bedingt beträchtlichen Aufwand. Sie wurde bislang bei Mikrofilm-Lesegeräten noch nicht in Erwägung gezogen.

Der Erfindung liegt die Aufgabe zugrunde, bei einem Mikrofilm-Lesegerät der eingangs genannten Art die Ausleuchtung des Projektionsbildes zu verbessern und mit denselben Mitteln das Auswechseln der Objektive zu ermöglichen.

Diese Aufgabe wird erfindungsgemäß dadurch gelöst, daß a) die Beleuchtungseinheit relativ zum Objektiv in Richtung des Bildrandes der Filmbühne voreilend ausgebildet ist und daß b) die Objektive in Richtung der Bewegung der Abbildungseinheit nebeneinander angeordnet sind, so daß der Austausch der beiden Objektive mit den für die Bewegung der Abbildungseinheit vorgesehenen Mitteln durchführbar ist.

Durch dieses Voreilen der Beleuchtungseinheit relativ zum Objektiv hat das erfindungsgemäße Mikrofilm-Lesegerät gegenüber herkömmlichen Mikrofilm-Lesegeräten eine erheblich verbesserte Projektionsgüte. Bei dem bisher bekannten Mikrofilm-Lesegerät ergibt es sich zwangsläufig, daß beim Projizieren eines an einer Seite der Filmkarte gelegenen Filmbildes die hellste Stelle des Projektionsbildes aus der Bildmitte zum Bildrand wandert. Das führt zu ungenügend ausgeleuchteten Projektionsbildern und zu einer Minderung der Abbildungsqualität. Bei dem erfindungsgemäßen Mikrofilm-Lesegerät besteht die Möglichkeit, die Beleuchtungseinheit in bezug auf die optische Achse des Objektivs so weit voreilen zu lassen, daß die hellste Stelle wieder in die Bildmitte gelangt.

Da der Objektivhalter und die Beleuchtungseinheit unabhängig voneinander verfahrbar sind, kann das jeweils gewünschte Objektiv durch Verfahren des Objektivhalters entsprechend seiner Brennweite in die richtige Position zum Filmbild gefahren werden. Man benötigt deshalb keine aufwendigen Schwenkmechanismen, um unterschiedliche Objektive einsetzen zu können.

Das erfindungsgemäße Mikrofilm-Lesegerät ist im Aufbau sehr einfach und kann deshalb sehr robust ausgeführt werden. Auch ganz am Rand einer Filmkarte liegende Filmbilder werden ausreichend gleichmäßig ausgeleuchtet und mit hoher Bildschärfe projiziert.

Eine besonders vorteilhafte Ausführungsform besteht darin, daß die Beleuchtungseinheit und der Objektivhalter jeweils einen eigenen Antrieb haben und unabhängig voneinander verfahrbar ausgebildet sind. Ein solches Mikrofilm-Lesegerät ist besonders stabil, da sowohl die Beleuchtungseinheit als auch der Objektivhalter unabhängig voneinander auf Geradführungen geführt werden können. Diese hohe Stabilität ist vor allem bei einem Lampenwechsel vorteilhaft, weil es dabei bei bisher bekannten Geräten relativ leicht zu einem Verbiegen von funktionell wichtigen Bauteilen kommen kann.

Die für jedes Filmbild optimale Stellung der Beleuchtungseinheit relativ zum Objektiv läßt sich automatisch erzielen, wenn die Relativbewegung der Beleuchtungseinheit in bezug auf den Objektivhalter mittels eines Rechners gesteuert ist. Mit einem solchen Rechner können problemlos die unterschiedlichen Brennweiten der einzelnen Objektive für das Maß des Mittenversatzes berücksichtigt werden.

Die Verstellung des Objektivhalters erfolgt konstruktiv auf besonders einfache Weise, wenn der Objektivhalter fest mit einem quer zum Strahlengang angeordneten Zahnriemen verbunden ist.

Zur weiteren Erläuterung des erfindungsgemäßen Mikrofilm-Lesegerätes sei nunmehr auf die Zeichnung Bezug genommen. Diese zeigt in

Fig. 1 eine schematische Darstellung des Strahlenganges bei dem erfindungsgemäßen Mikrofilm-Lesegerät,

Fig. 2 eine schematische Draufsicht auf die für die Erfindung wesentlichen Teile eines Mikrofilm-Lesegerätes.

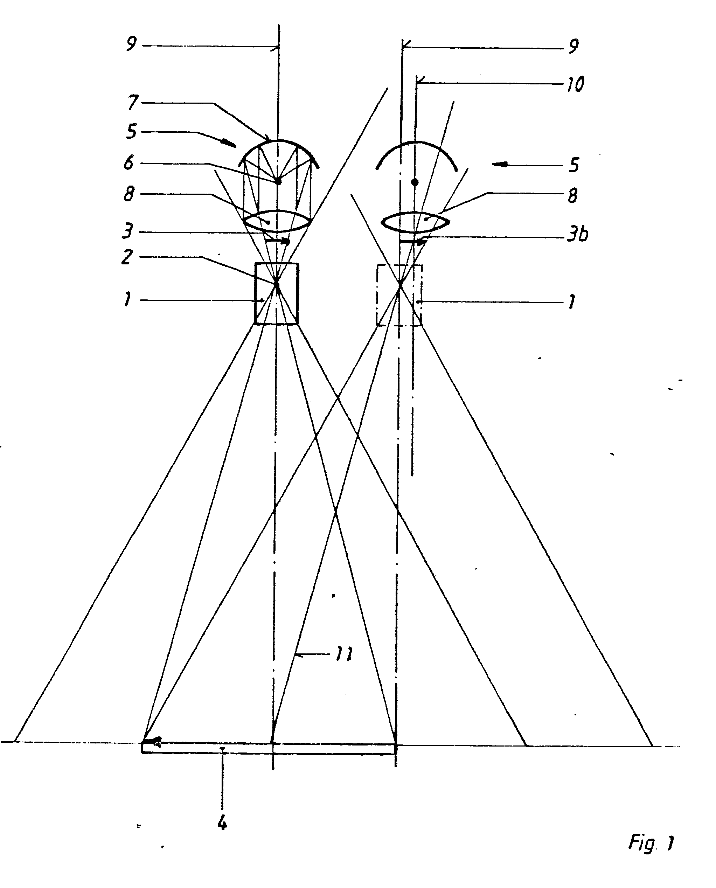

In der Figur 1 ist schematisch ein Objektiv 1 mit einem Hauptpunkt 2 dargestellt, durch welches ein Filmbild 3 auf eine Projektionsfläche 4 projiziert wird. Zur Durchleuchtung des Filmbildes 3 dient eine Beleuchtungseinheit 5, die aus einer Lampe 6, einem Hohlspiegel 7 und einem Kondensor 8 besteht. Mit 9 ist eine optische Achse des Objektivs 1 bezeichnet, die genau durch die optische Achse der Beleuchtungseinheit 5, den Hauptpunkt 2 des Objektivs 1 und die Mitte der Projektionsfläche 4 verläuft. Wichtig für die Erfindung ist, daß der aus dem Objektiv 1 austretende Strahlenkegel einen solchen Öffnungswinkel hat, daß ein wesentlich größerer Bereich als die Projektionsfläche 4 angestrahlt wird.

Soll nun ein seitlich des Filmbildes 3 liegendes Filmbild 3b auf die Projektionsfläche 4 projiziert werden, dann verfährt man das Objektiv in der Zeichnung gesehen nach rechts bis in die gestrichelt dargestellte Stellung. Während zuvor die optische Achse 9 des Objektivs 1 genau durch die Mitte des Filmbildes 3 verlief, muß sie jetzt seitlich des Filmbildes 3b verlaufen, damit das Filmbild 3 voll auf die in ihrer Lage unveränderte Projektionsfläche 4 gelangt. Würde sich nun die Beleuchtungseinheit 5 genau wie zuvor in einer zum Objektiv fluchtenden Position befinden, dann würde in der Zeichnung gesehen der rechte Rand der Projektionsfläche am stärksten ausgeleuchtet. Um zu einer gleichmäßigen Ausleuchtung zu gelangen, verschiebt man die Beleuchtungseinheit 5 über die optische Achse 9 des Objektivs 1 hinaus in Richtung des Filmbildes 3b, so daß die mit 10 bezeichnete optische Achse der Beleuchtungseinheit 5 durch das Filmbild 3 führt. Die Praxis hat gezeigt, daß die optische Achse 10 der Beleuchtungseinheit 5 gegenüber der optischen Achse 9 des Objektivs soviel voreilen muß, daß sie die mit 11 bezeichnete Verbindungslinie zwischen der Mitte der Projektionsfläche 4 und dem Hauptpunkt 2 des Objektivs 1 in Höhe des Filmbildes schneidet.

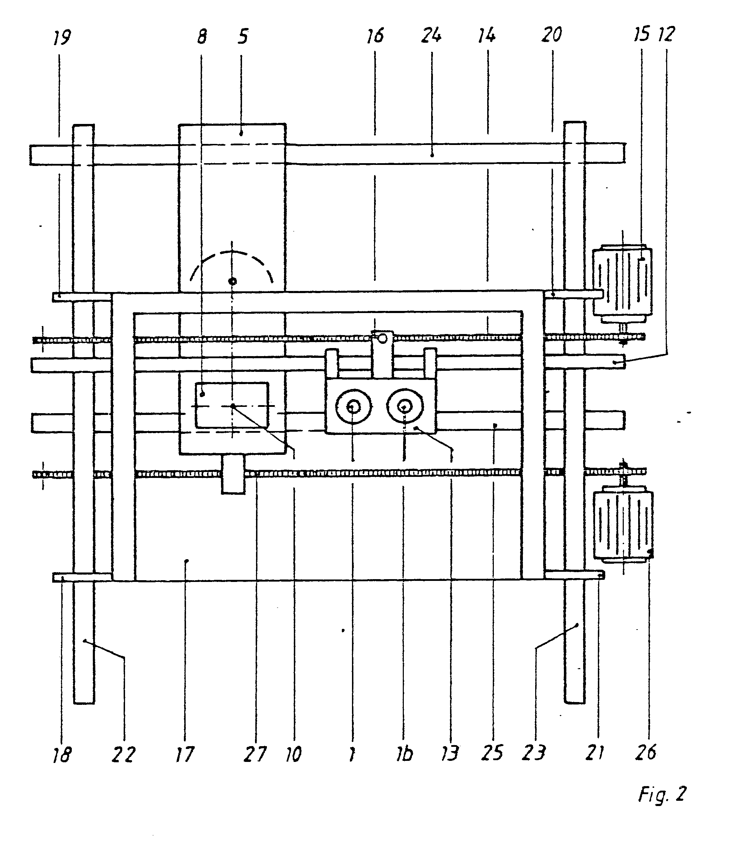

Figur 2 zeigt von oben gesehen eine durch eine zylindrische Stange gebildete Querführung 12, auf der ein Objektivhalter 13 in Querrichtung verschieblich angeordnet ist. Zum Verschieben des Objektivhalters 13 dient ein Zahnriemen 14, der parallel zur Querführung angeordnet ist und mittels eines Antriebs 15 um definierte Beträge gedreht werden kann. Der Objektivhalter 13 ist durch einen Arm 16 mit dem oberen Trum des Zahnriemens 14 verbunden, damit der Zahnriemen 14 den Objektivhalter 13 verschieben kann.

Im Objektivhalter 13 sind nebeneinander zwei Objektive 1 sowie 1b unterschiedlicher Brennweite derart schwimmend gelagert, das sie auf der oberen Glasplatte einer Filmbühne 17 zu gleiten vermögen. Die Filmbühne 17 ist mit Führungstücken 18, 19, 20, 21 auf zwei parallel zueinander ausgerichteten Längsführungen 22, 23 verschieblich angeordnet. Unterhalb der Filmbühne 17 befindet sich die Beleuchtungseinheit 5, welche unabhängig von dem Objektivhalter 13 auf zwei separaten Querführungen 24, 25 verfahren werden kann. Ein Antrieb 26 vermag hierzu einen Zahnriemen 27 anzutreiben, dessen oberes Trum mit der Beleuchtungseinheit verbunden ist. Es ergibt sich somit, daß die Beleuchtungseinheit 5 durch den Antrieb 26 und unabhängig davon der Objektivhalter 13 durch den Antrieb 15 zu verfahren sind.

Bei Gebrauch des teilweise dargestellten Mikrofilm-Lesegerätes befindet sich eines der Objektive 1 bzw. 1b oberhalb des Kondensors 8 der Beleuchtungseinheit 5, und zwar in mittlerer Stellung der Beleuchtungseinheit 5 genau fluchtend zu ihrer optischen Achse 10, mit zunehmender Randlage jedoch zur jeweiligen Seite hin versetzt.

Auflistung der verwendeten Positionszahlen

    1 Objektiv
    2 Hauptpunkt
    3 Filmbild
    4 Projektionsfläche
    5 Beleuchtungseinheit
    6 Lampe
    7 Hohlspiegel
    8 Kondensor
    9 optische Achse
    10 optische Achse
    11 Verbindungslinie
    12 Querführung
    13 Objektivhalter
    14 Zahnriemen
    15 Antrieb
    16 Arm
    17 Filmbühne
    18 Führungsstück
    19 Führungsstück
    20 Führungsstück
    21 Führungsstück
    22 Längsführung
    23 Längsführung
    24 Querführung
    25 Querführung
    26 Antrieb
    27 Zahnriemen

**Patentansprüche**

1. Mikrofilm-Lesegerät, welches eine in einer parallel zur Filmebene liegenden Richtung verfahrbare Filmbühne (17) und eine in derselben Ebene senkrecht zur ersten Richtung verfahrbare Abbildungseinheit bestehend aus einer Beleuchtungseinheit (5) und einem Objektiv (1) aufweist, wobei mindestens zwei gegenseitig austauschbare Objektive (1, 1b) zur Erzielung unterschiedlicher Vergrößerungen vorgesehen sind, dadurch gekennzeichnet, daß

a) die Beleuchtungseinheit (5) relativ zum Objektiv (1) in Richtung des Bildrandes der Filmbühne (17) voreilend ausgebildet ist und daß

b) die Objektive (1, 1b) in Richtung der Bewegung der Abbildungseinheit (5, 1) nebeneinander angeordnet sind, so daß der Austausch der beiden Objektive mit den für die Bewegung der Abbildungseinheit vorgesehenen Mitteln (12, 13) durchführbar ist.

2. Mikrofilm-Lesegerät nach Anspruch 1, dadurch gekennzeichnet, daß die Beleuchtungseinheit (5) und der Objektivhalter (13) jeweils einen eigenen Antrieb (15, 26) haben und unabhängig voneinander verfahrbar ausgebildet sind.

3. Mikrofilm-Lesegerät nach Anspruch 1 oder einem der folgenden, dadurch gekennzeichnet, daß die Relativbewegung der Beleuchtungseinheit (5) in bezug auf den Objektivhalter (13) mittels eines Rechners gesteuert ist.

4. Mikrofilm-Lesegerät nach Anspruch 1 oder einem der folgenden, dadurch gekennzeichnet, daß der Objektivhalter (13) auf einer Querführung (12) angeordnet und mit dem Antrieb (15) gekoppelt ist.

5. Mikrofilm-Lesegerät nach Anspruch 1 oder einem der folgenden, dadurch gekennzeichnet, daß der Objektivhalter (13) fest mit einem quer zum Strahlengang angeordneten Zahnriemen (14) verbunden ist.

**Claims**

1. Microfilm reader with a film holder (17) being capable of moving in a direction parallel to the film plane and a projection unit being capable of moving in the same plane vertically to the first direction, this projection unit consisting of a lighting unit (5) and a lens (1), providing at least two mutually interchangeable lenses (1, 1b) in order to obtain different magnifications, wherein

a) the lighting unit (5) is designed for advancing the film holder (17) in relation to the lens (1) in the direction of the edge of the frame and

b) the lenses (1, 1b) are arranged side by side in the direction of the movement of the projection unit (5, 1), so that it is possible to interchange the two lenses by the means (12, 13) provided for the movement of the projection unit.

2. Microfilm reader according to claim 1, wherein the lighting unit (5) and the lens holder (13) each have its own drive (15, 26) and are designed to be capable of moving independently of each other.

3. Microfilm reader according to claim 1 or one of the following, wherein the relative movement of the lighting unit (5) in relation to the lens holder (13) is controlled by means of a computer.

4. Microfilm reader according to claim 1 or one of the following, wherein the lens holder (13) is arranged on a transverse guide (12) and coupled with its drive (15).

5. Microfilm reader according to claim 1 or one of the following, wherein the the lens holder (13) is firmly connected with a toothed belt (14) positioned at right angles in relation to the beam path.

**Revendications**

1. Lecteur de microfiche, qui comporte une platine de film déplaçable dans une direction s'étendant parallèlement au plan du film et une unité de représentation déplaçable dans le même plan perpendiculaire à la première direction constitué d'une unité d'éclairage (5) et d'un objectif (1), dans lequel on prévoit au moins deux objectifs (1, 1b) échangeables l'un par l'autre pour obtenir des grossissements différents, caractérisé en ce que

a) l'unité d'éclairage (5) est conformée en avant par rapport à l'objectif (1) en direction de la bordure d'image de la platine de film (17), et que

b) les objectifs (1, 1b) sont disposés côte à côte dans la direction du déplacement de l'unité de représentation (5, 1) de manière que l'échange des deux objectifs puisse être exécuté avec les moyens (12, 13) prévus pour le déplacement de l'unité de représentation.

2. Lecteur de microfiche selon la revendication 1, caractérisé en ce que l'unité d'éclairage (5) et le support d'objectif (13) comportent chacun un entraînement propre (15, 26) et qu'ils sont conçus pouvant être actionnés indépendamment l'un de l'autre.

3. Lecteur de microfiche selon la revendication 1 ou l'une des suivantes, caractérisé en ce que le déplacement relatif de l'unité d'éclairage (5) par rapport au support d'objectif (13) est commandé par un ordinateur.

4. Lecteur de microfiche selon la revendication 1 ou l'une des suivantes, caractérisé en ce que le support d'objectif (13) est disposé sur un guidage transversal (12) et qu'il est couplé à l'entraînement (15).

5. Lecteur de microfiche selon la revendication 1 ou l'une des suivantes, caractérisé en ce que le support d'objectif (13) est relié de manière fixe à une courroie dentée (14) disposée transversalement par rapport au cheminement des rayons.

0 180 024

Fig. 1

0 180 024

19    8   5        16   24   14   20        15 12

18   22   17   27   10   1   1b   13   25   23   21   26

*Fig. 2*

2